# EUROPEAN PATENT APPLICATION

(11) **EP 4 280 713 A1**
(43) Date of publication of application: **22.11.2023**
(21) Application number: 21919387.7
(22) Date of filing: 15.01.2021
(51) Int. Cl.: H04W 56/00

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2021/001311
(87) International publication number: WO 2022/153494

(57) **Abstract**

A terminal according to one aspect of the present disclosure includes: a receiving section that receives a synchronization signal block of a non-serving cell; and a control section that determines a transmission configuration indication (TCI) state of a demodulation reference signal of a physical downlink shared channel or a physical downlink control channel of the non-serving cell, based on the synchronization signal block of the non-serving cell. According to one aspect of the present disclosure, it is possible to suppress communication overhead in inter-cell mobility.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

In existing LTE systems (for example, 3GPP Rel. 8 to Rel. 14), a user terminal (User Equipment (UE)) transmits uplink control information (UCI) by using at least one of a UL data channel (for example, a Physical Uplink Shared Channel (PUSCH)) and a UL control channel (for example, a Physical Uplink Control Channel (PUCCH)).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), layer 1 / layer 2 (L1/L2) inter-cell mobility is studied to facilitate more efficient DL/UL beam management (that achieves lower latency and overhead).

However, a method for updating a TCI state in explicit way by Radio Resource Control (RRC) signaling / Medium Access Control Control Element (MAC CE) / Downlink Control Information (DCI) or the like or updating a TCI state, based on PRACH transmission has an issue that communication overhead is high due to RRC reconfiguration, PRACH transmission, and the like.

Thus, an object of the present disclosure is to provide a terminal, a radio communication method, and a base station that can suppress communication overhead in inter-cell mobility.

### Solution to Problem

A terminal according to one aspect of the present disclosure includes: a receiving section that receives a synchronization signal block of a non-serving cell; and a control section that determines a transmission configuration indication (TCI) state of a demodulation reference signal of a physical downlink shared channel or a physical downlink control channel of the non-serving cell, based on the synchronization signal block of the non-serving cell.

### Advantageous Effects of Invention

According to one aspect of the present disclosure, it is possible to suppress communication overhead in inter-cell mobility.

### Brief Description of Drawings

[FIG. 1] FIGS. 1A to 1D are diagrams to show examples of a multi-TRP scenario.
[FIG. 2] FIG. 2A is a diagram to show an example of intra-cell TRPs. FIG. 2B is a diagram to show an example of inter-cell TRPs.
[FIG. 3] FIG. 3 is a diagram to show QCL relationships in a first embodiment.
[FIG. 4] FIG. 4 is a diagram to show a first example of a QCL relationship in a second embodiment.
[FIG. 5] FIG. 5 is a diagram to show a second example of a QCL relationship in the second embodiment.
[FIG. 6] FIG. 6 is a diagram to show a third example of QCL relationships in the second embodiment.
[FIG. 7] FIG. 7 is a diagram to show an example of RS transmission in the first embodiment and the second embodiment.
[FIG. 8] FIG. 8 is a diagram to show an example of switching of a TCI state in a third embodiment.
[FIG. 9] FIG. 9A is a diagram to show QCL relationships of an RS in a serving cell. FIG. 9B is a diagram to show QCL relationships of an RS in a non-serving cell.
[FIG. 10] FIG. 10 is a diagram to show an application example of a single TRP.
[FIG. 11] FIG. 11 is a diagram to show an example of a schematic structure of a radio communication system according to one embodiment.
[FIG. 12] FIG. 12 is a diagram to show an example of a structure of a base station according to one embodiment.
[FIG. 13] FIG. 13 is a diagram to show an example of a structure of a user terminal according to one embodiment.
[FIG. 14] FIG. 14 is a diagram to show an example of a hardware structure of the base station and the user terminal according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have a different parameter(s) (or a parameter set(s)) that can be assumed to be the same, and such parameters (which may be referred to as QCL parameters) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

In the present disclosure, the higher layer signaling may be, for example, any one or combinations of Radio Resource Control (RRC) signaling, medium access control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a tracking reference signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An information element of the TCI state ("TCI-state IE" of RRC) configured using higher layer signaling may include one or a plurality of pieces of QCL information ("QCL-Info"). The QCL information may include at least one of information related to the RS to have a QCL relationship (RS relation information) and information indicating a QCL type (QCL type information). The RS relation information may include information such as an index of the RS (for example, an SSB index or a non-zero power CSI-RS (NZP CSI-RS) resource ID (Identifier)), an index of a cell in which the RS is located, and an index of a Bandwidth Part (BWP) in which the RS is located.

In Rel-15 NR, as a TCI state of at least one of a PDCCH and a PDSCH, both an RS of QCL type A and an RS of QCL type D or only an RS of QCL type A can be configured for a UE.

In a case where a TRS is configured as an RS of QCL type A, it is assumed that the same TRS is transmitted periodically over a long time period, unlike a demodulation reference signal (DMRS) of a PDCCH or a PDSCH. The UE measures the TRS to thereby be able to calculate an average delay, delay spread, and the like.

The UE configured with the TRS as the RS of QCL type A in the TCI state of the DMRS of the PDCCH or the PDSCH can assume that the parameters (average delay, delay spread, or the like) of QCL type A are the same for the DMRS of the PDCCH or the PDSCH and the TRS and can hence obtain the parameter (average delay, delay spread, or the like) of type A of the DMRS of the PDCCH or the PDSCH from the measurement result of the TRS. When the UE performs channel estimation for at least one of the PDCCH and the PDSCH, the UE can use the measurement result of the TRS to perform channel estimation at higher accuracy.

The UE configured with an RS of QCL type D can determine a UE receive beam (spatial domain reception filter, UE spatial domain reception filter) by using the RS of QCL type D.

An RS of QCL type X in a TCI state may mean an RS in a relationship of QCL type X with (a DMRS of) a certain channel/signal, and this RS may be referred to as a QCL source of QCL type X in the TCI state.

### (Multi-TRP)

For NR, it is studied that one or a plurality of transmission/reception points (TRPs) (multi-TRP) perform DL transmission to a UE by using one or a plurality of panels (multi-panel). It is also studied that the UE performs UL transmission to the one or plurality of TRPs.

Note that the plurality of TRPs may correspond to the same cell identifier (ID) or may correspond to different cell IDs. The cell ID may be a physical cell ID or a virtual cell ID.

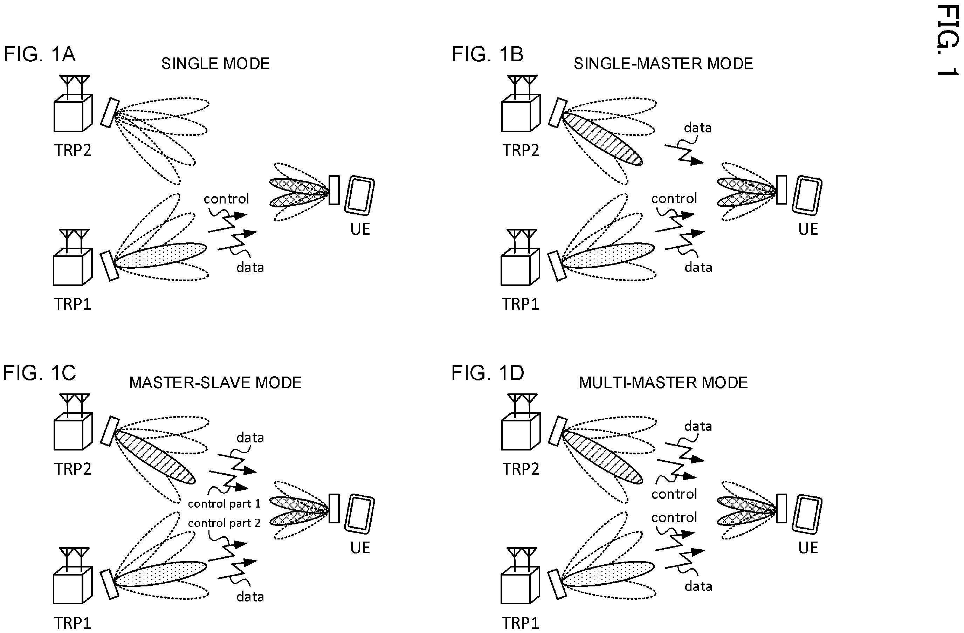

FIGS. 1A to 1D are diagrams to show examples of a multi-TRP scenario. In these examples, it is assumed that each TRP can transmit four different beams, but this is not restrictive.

FIG. 1A shows an example of a case where only one TRP (TRP1 in this example) of multi-TRP performs transmission to a UE (which may be referred to as a single mode, a single TRP, and the like). In this case, TRP1 transmits both a control signal (PDCCH) and a data signal (PDSCH) to the UE.

FIG. 1B shows an example of a case where only one TRP (TRP1 in this example) of the multi-TRP transmits a control signal to the UE and the multi-TRP transmits data signals (which may be referred to as a single master mode). The UE receives PDSCHs transmitted from the multi-TRP, based on one piece of downlink control information (DCI).

FIG. 1C shows an example of a case where each of the multi-TRP transmits part of a control signal to the UE and the multi-TRP transmits data signals (which may be referred to as a master-slave mode). TRP1 may transmit part 1 of the control signal (DCI), and TRP2 may transmit part 2 of the control signal (DCI). Part 2 of the control signal may depend on part 1. The UE receives the PDSCHs transmitted from the multi-TRP, based on these parts of DCI.

FIG. 1D shows an example of a case where each of the multi-TRP transmits a separate control signal to the UE and the multi-TRP transmits data signals (which may be referred to as a multi-master mode). TRP1 may transmit a first control signal (DCI), and TRP2 may transmit a second control signal (DCI). The UE receives the PDSCHs transmitted from the multi-TRP, based on these pieces of DCI.

When a plurality of PDSCHs from multi-TRP (which may be referred to as multi-PDSCH (multiple PDSCHs)) are scheduled by using one piece of DCI as in FIG. 1B, the DCI may be referred to as single DCI (single PDCCH). When a plurality of PDSCHs from multi-TRP are scheduled by using a plurality of pieces of DCI as in FIG. 1D, the plurality of pieces of DCI may be referred to as multi-DCI (multi-PDCCH (multiple PDCCHs)) .

Each TRP of the multi-TRP may transmit a different codeword (Code Word (CW)) and a different layer. As one mode of multi-TRP transmission, non-coherent joint transmission (NCJT) is studied.

In NCJT, for example, TRP1 performs modulation mapping on a first codeword, performs layer mapping, and transmits a first PDSCH in layers of a first number (for example, two layers) by using first precoding. TRP2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, and 4). In scheme 1, multi-PDSCH from multi-TRP is space division multiplexed (SDMed). In schemes 2a and 2b, PDSCHs from multi-TRP is frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such a multi-TRP scenario, more flexible transmission control using a channel with high quality is possible.

In the multi-master mode as in FIG. 1D, a configuration that the same physical cell ID is configured for a plurality of TRPs (intra-TRP mobility, intra-cell TRP mobility, intra-cell mobility, intra-cell multi-TRP operation) and a configuration that different physical cell IDs are configured for a plurality of TRPs (inter-TRP mobility, inter-cell TRP mobility, inter-cell mobility, or inter-cell multi-TRP operation) are considered.

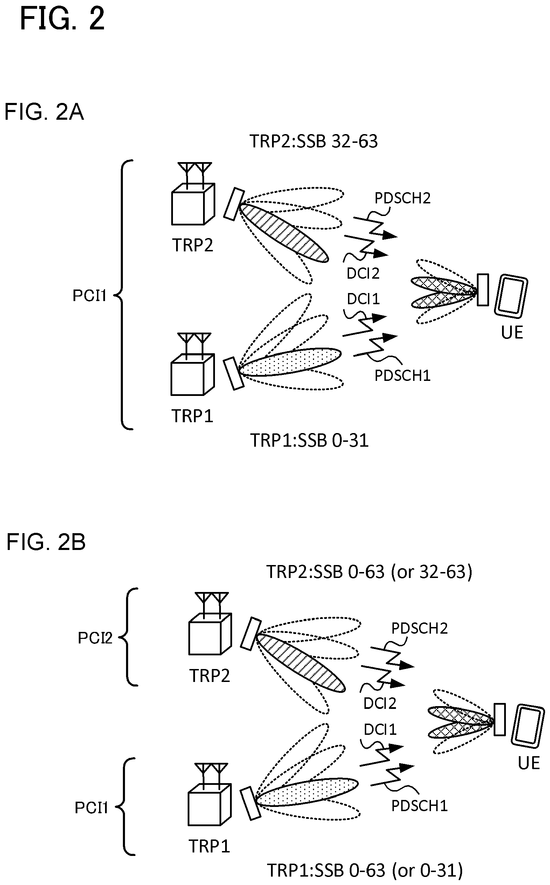

FIG. 2A is a diagram to show an example of intra-cell mobility. As shown in FIG. 2A, the same physical cell ID (PCI1) is configured for TRP1 and TRP2. In this case, an SSB (SSBindex) transmitted from TRP1 and an SSB transmitted from TRP2 need be different from each other. In the example in FIG. 2A, the SSB of TRP1 is 0-31, while the SSB of TRP2 is 32-63.

FIG. 2B is a diagram to show an example of inter-cell mobility. As shown in FIG. 2B, different physical cell IDs (PCI1, PCI2) are configured for TRP1 and TRP2. In this case, an SSB transmitted from TRP1 and an SSB transmitted from TRP2 may overlap or may be different from each other. In the example in FIG. 2B, the SSBs of TRP1 and TRP2 may be both 0-63. Alternatively, the SSB of TRP1 may be 0-31, while the SSB of TRP2 may be 32-63. In this case, an RS in a TCI state of PDSCH1/PDSCH2 is PCI1 or PCI2,

### (TCI State for TRS/CSI-RS/DMRS)

For a periodic CSI-RS resource in NZP-CSI-RS-ResourceSet configured with a higher layer parameter trs-Info, the UE may assume that a TCI state indicates one of QCL types (1-1) and (1-2) below.

(1-1) "QCL-TypeC" with an SS/PBCH block, and "QCL-TypeD" with the same SS/PBCH block when applicable.
(1-2) "QCL-TypeC" with an SS/PBCH block, and "QCL-TypeD" with a CSI-RS resource in *NZP-CSI-RS-ResourceSet* configured with a higher layer parameter "repetition," if applicable.

For an aperiodic CSI-RS resource in *NZP-CSI-RS-ResourceSet* configured with the higher layer parameter trs-Info, the UE assumes that a TCI state indicates "QCL-TypeA." This "QCL-TypeA" is with an aperiodic CSI-RS resource in *NZP-CSI-RS-ResourceSet* configured with the higher layer parameter trs-Info. The UE may assume "QCL-TypeD" with the same periodic CSI-RS resource if applicable.

For a CSI-RS resource in NZP-CSI-RS-ResourceSet configured without the higher layer parameter trs-Info and the higher layer parameter "repetition," the UE may assume that a TCI state indicates one of QCL types (2-1) to (2-4) below.

(2-1) "QCL-TypeA" with a CSI-RS resource in NZP-CSI-RS-ResourceSet configured with the higher layer parameter trs-Info, and "QCL-TypeD" with the same CSI-RS resource if applicable.
(2-2) "QCL-TypeA" with a CSI-RS resource in NZP-CSI-RS-ResourceSet configured with the higher layer parameter trs-Info, and "QCL-TypeD" with an SS/PBCH block, if applicable.
(2-3) "QCL-TypeA" with a CSI-RS resource in NZP-CSI-RS-ResourceSet configured with the higher layer parameter trs-Info, and "QCL-TypeD" with a CSI-RS resource in NZP-CSI-RS-ResourceSet configured with the higher layer parameter *repetition*, if applicable.
(2-4) When "QCL-TypeD" is not applied, "QCL-TypeB" with a CSI-RS resource in NZP-CSI-RS-ResourceSet configured with the higher layer parameter trs-Info.

For a CSI-RS resource in NZP-CSI-RS-ResourceSet configured with the higher layer parameter *repetition*, the UE may assume that a TCI state indicates one of QCL types (3-1) to (3-3) below.

(3-1) "QCL-TypeA" with a CSI-RS resource in NZP-CSI-RS-ResourceSet configured with the higher layer parameter trs-Info, and "QCL-TypeD" with the same CSI-RS resource if applicable.
(3-2) "QCL-TypeA" with a CSI-RS resource in NZP-CSI-RS-ResourceSet configured with the higher layer parameter trs-Info, and "QCL-TypeD" with a CSI-RS resource in NZP-CSI-RS-ResourceSet configured with the higher layer parameter *repetition*, if applicable.
(3-3) "QCL-TypeC" with an SS/PBCH block, and "QCL-TypeD" with the same SS/PBCH block when applicable.

For a demodulation reference signal (DM-RS) of a PDCCH, the UE may assume that a TCI state indicates one of QCL types (4-1) to (4-3) below.

(4-1) "QCL-TypeA" with a CSI-RS resource in NZP-CSI-RS-ResourceSet configured with the higher layer parameter trs-Info, and "QCL-TypeD" with the same CSI-RS resource if applicable.
(4-2) "QCL-TypeA" with a CSI-RS resource in NZP-CSI-RS-ResourceSet configured with the higher layer parameter trs-Info, and "QCL-TypeD" with a CSI-RS resource in NZP-CSI-RS-ResourceSet configured with the higher layer parameter *repetition*, if applicable.
(4-3) "QCL-TypeA" with a CSI-RS resource in NZP-CSI-RS-ResourceSet configured without the higher layer parameter *repetition* and the higher layer parameter trs-Info, and "QCL-TypeD" with the same CSI-RS resource if applicable.

For a DM-RS of a PDSCH, the UE may assume that a TCI state indicates one of QCL types (5-1) to (5-3) below.

(5-1) "QCL-TypeA" with a CSI-RS resource in NZP-CSI-RS-ResourceSet configured with the higher layer parameter trs-Info, and "QCL-TypeD" with the same CSI-RS resource if applicable.
(5-2) "QCL-TypeA" with a CSI-RS resource in NZP-CSI-RS-ResourceSet configured with the higher layer parameter trs-Info, and "QCL-TypeD" with a CSI-RS resource in NZP-CSI-RS-ResourceSet configured with the higher layer parameter *repetition*, if applicable.
(5-3) "QCL-TypeA" with a CSI-RS resource in NZP-CSI-RS-ResourceSet configured without the higher layer parameter *repetition* and the higher layer parameter trs-Info, and "QCL-TypeD" with the same CSI-RS resource if applicable.

### (Inter-cell Mobility)

Layer 1 / layer 2 (L1/L2) inter-cell mobility that facilitates more efficient DL/UL beam management (that achieves lower latency and overhead) is studied. For example, by assuming multi-DCI-based multi-PDSCH reception, QCL/TCI related enhancement that enables inter-cell multi-TRP operation may be performed.

It is considered to combine at least part of TCIs received by the UE with information of a non-serving cell, to thereby facilitate measurement and report of an RS of the non-serving cell. For example, it is studied whether to support a beam indication of a TCI associated with the RS of the non-serving cell (for example, update of a TCI state and activation of a necessary TCI state). In this case, the RS of the non-serving cell may be provided as a QCL source of a DM-RS of a PDCCH/PDSCH.

It is considered, in order to reduce interrupt processing at the time of crossing a PCI boundary (changing a cell/PCI), to allow a QCL relationship between an RS of a serving cell and an RS of a non-serving cell. The QCL sources of DM-RSs of a PDCCH/PDSCH are CSI-RSs of different types, and an existing QCL relationship may be applied directly. Hence, by combining information (QCL information, TCI state) of the non-serving cell with the TCI state of a CSI-RS, this enables the UE to directly receive the DM-RS of the PDCCH/PDSCH from the non-serving cell by using the information. Note that the number of non-serving cells is not limited to one.

It is studied that a UE supports inter-PCI dynamic point selection (DPS) when the UE performs reception from only one TRP at one time. In methods in Rel. 16 (or previous versions), a UE explicitly updates a TCI state by RRC / MAC CE / DCI, or updates a TCI state, based on the newest (latest) PRACH transmission to update (handover) a PCI (cell).

However, the methods in Rel. 16 (or previous versions) have an issue that high communication overhead due to PRACH transmission, RRC reconfiguration, and the like prevents data communication from being appropriately performed during an update procedure, for example.

Thus, the inventors of the present invention came up with the idea of a terminal including: a receiving section that receives a synchronization signal block (SSB) of a non-serving cell; and a control section that determines a transmission configuration indication (TCI) state of a demodulation reference signal (DM-RS) of a physical downlink shared channel (PDSCH) or a physical downlink control channel (PDCCH) of the non-serving cell, based on the synchronization signal block of the non-serving cell. According to one aspect of the present disclosure, high-speed inter-cell mobility can be achieved.

Embodiments according to the present disclosure will be described in detail with reference to the drawings as follows. The radio communication methods according to respective embodiments may each be employed individually, or may be employed in combination.

Note that in the present disclosure, a panel, an Uplink (UL) transmission entity, a point, a TRP, a TRP-ID, a TRP ID, a spatial relation, a control resource set (COntrol REsource SET (CORESET)), a PDSCH, a codeword, a base station, a certain antenna port (for example, a demodulation reference signal (DMRS) port), a certain antenna port group (for example, a DMRS port group), a certain group (for example, a code division multiplexing (CDM) group, a certain reference signal group, or a CORESET group), and a CORESET pool may be interchangeably interpreted. A panel Identifier (ID) and a panel may be interchangeably interpreted.

In the present disclosure, a cell, a CC, a carrier, a BWP, and a band may be interchangeably interpreted.

In the present disclosure, an index, an ID, an indicator, and a resource ID may be interchangeably interpreted.

A TCI state, a TCI state or QCL assumption, QCL assumption, QCL information, a QCL parameter, a spatial domain reception filter, a UE spatial domain reception filter, a spatial domain filter, a UE receive beam, a DL receive beam, DL precoding, a DL precoder, a DL-RS, an RS of QCL type D in a TCI state or QCL assumption, and an RS of QCL type A in a TCI state or QCL assumption may be interchangeably interpreted. An RS of QCL type D, a DL-RS associated with QCL type D, and a DL-RS, a DL-RS source, an SSB, and a CSI-RS having QCL type D may be interchangeably interpreted.

In the resent disclosure, a TCI state may be information (for example, a cell in which a DL-RS, a QCL type, or a DL-RS is transmitted or the like) related to a receive beam (spatial domain reception filter) indicated to (configured for) a UE. QCL assumption may be information (for example, a cell in which a DL-RS, a QCL type, or a DL-RS is transmitted or the like) related to a receive beam (spatial domain reception filter) assumed by a UE, based on transmission or reception of an associated signal (for example, a PRACH).

In the present disclosure, a spatial relation, spatial relation information, spatial relation assumption, a QCL parameter, a spatial domain transmission filter, a UE spatial domain transmission filter, a spatial domain filter, a UE transmit beam, a UL transmit beam, UL precoding, a UL precoder, an RS of a spatial relation, a DL-RS, QCL assumption, an SRI, a spatial relation based on an SRI, and a UL TCI may be interchangeably interpreted.

In the present disclosure, a TRS, a CSI-RS for tracking, a CSI-RS including TRS information (higher layer parameter trs-Info), and an NZP-CSI-RS resource in an NZP-CSI-RS resource set including TRS information may be interchangeably interpreted.

In the present disclosure, a beam, a spatial domain filter, spatial setting, a TCI state, a TCI state pool, a plurality of TCI states, a UL TCI state, a unified TCI state, a unified beam, a common TCI state, a common beam, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state or QCL assumption, an RS of QCL type A in a TCI state / QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, a DL-RS having QCL type X, a DL-RS source, an SSB, a CSI-RS, and an SRS may be interchangeably interpreted.

In the present disclosure, a normal TRP, a single TRP, a single-TRP system, single-TRP transmission, and a single PDSCH may be interchangeably interpreted. In the present disclosure, multi-TRP, multi-TRP system, multi-TRP transmission, and multi-PDSCH may be interchangeably interpreted. In the present disclosure, single DCI, a single PDCCH, multi-TRP based on single DCI, and two TCI states in at least one TCI codepoint being activated may be interchangeably interpreted.

In the present disclosure, a single TRP, a channel using a single TRP, a channel using one TCI state / spatial relation, multi-TRP being not enabled by RRC/DCI, a plurality of TCI states / spatial relations being not enabled by RRC/DCI, one CORESET pool index (CORESETPoolIndex) value being not configured for any CORESET and any codepoint of a TCI field being not mapped to two TCI states, performing communication with one transmission/reception point, and applying a single TRP may be interchangeably interpreted.

In the present disclosure, multi-TRP, a channel using multi-TRP, a channel using a plurality of TCI states / spatial relations, multi-TRP being enabled by RRC/DCI, a plurality of TCI states / spatial relations being enabled by RRC/DCI, and at least one of multi-TRP based on single DCI and multi-TRP based on multi-DCI may be interchangeably interpreted. In the present disclosure, multi-TRP based on multi-DCI and one CORESET pool index (CORESETPoolIndex) value being configured for a CORESET may be interchangeably interpreted. In the present disclosure, multi-TRP based on single DCI and at least one codepoint in a TCI field being mapped to two TCI states may be interchangeably interpreted.

Embodiments according to the present disclosure will be described in detail with reference to the drawings as follows. The radio communication methods according to respective embodiments may each be employed individually, or may be employed in combination. Note that in the present disclosure, "A/B" may be interpreted as "at least one of A and B."

### (Radio Communication Method)

### <First Embodiment>

A UE may receive an SSB of a non-serving cell and assume that the QCL source of a DM-RS of a PDSCH/PDCCH of the non-serving cell is a CSI-RS/TRS of the non-serving cell and the QCL source of the CSI-RS/TRS of the non-serving cell is the SSB of the non-serving cell. In other words, the UE may determine a TCI state of the DM-RS of the PDSCH/PDCCH of the non-serving cell, based on the SSB of the non-serving cell. The UE may perform reception/measurement of a DM-RS and channel estimation of the serving cell/non-serving cell, based on the determined TCI state. The UE may perform reception/demodulation of a PDSCH/PDCCH of the serving cell/non-serving cell, based on the determined TCI state.

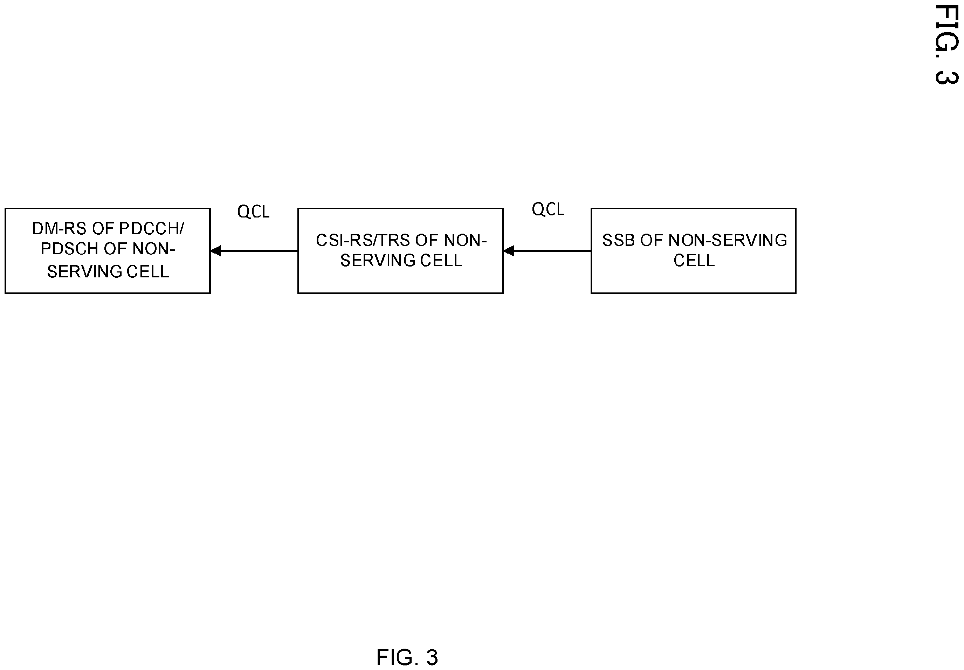

FIG. 3 is a diagram to show QCL relationships in a first embodiment. A QCL relationship between a DM-RS of a PDSCH/PDCCH of a non-serving cell and a CSI-RS/TRS of the non-serving cell may be QCL type A or D, for example. A QCL relationship between the CSI-RS/TRS of the non-serving cell and an SSB of the non-serving cell may be QCL type C or D, for example.

In the present disclosure, the QCL source of N being M, N and M being in a QCL relationship, N and M being in a relationship of QCL type X, and a TCI state of N indicating QCL type X with M (QCL-typeX with M) may be interchangeably interpreted. X may be A, B, C, or D, for example. N and M may each be one of a DM-RS, a CSI-RS, a TRS, and an SSB of a PDSCH/PDCCH, for example. A DM-RS, a CSI-RS, a TRS, and an SSB of a PDSCH/PDCCH may be interpreted as a TCI state of the DM-RS of the PDSCH/PDCCH, a TCI state of the CSI-RS, the TCI state of the TRS, and the TCI state of the SSB, respectively. An SSB and an SS/PBCH block may be interchangeably interpreted.

For a relationship between a DM-RS of a PDSCH/PDCCH of a non-serving cell and a CSI-RS/TRS of the non-serving cell, the UE may assume one of (4-1) to (5-3) described above.

For a relationship between a CSI-RS/TRS of the non-serving cell and an SSB (SS/PBCH block) of the non-serving cell, the UE may assume (1-1) or (1-2) described above. The QCL source of the CSI-RS/TRS of the non-serving cell may be at least one of the CSI-RS and the SSB (SS/PBCH block) of the non-serving cell, and in this case, the UE may assume one of (2-1) to (3-3) .

According to the first embodiment, by using an existing specification, an RS (SSB) of a non-serving cell can be applied as a QCL source. For example, even when the serving cell is changed in inter-cell mobility, a TCI state can be determined by directly applying the RS (SSB) of the non-serving cell, which eliminates the need for RRC reconfiguration and the like and can hence suppress communication overhead.

### <Second Embodiment>

The UE may receive an SSB of a non-serving cell and assume that the QCL source of a DM-RS of a PDSCH/PDCCH of the non-serving cell is an RS (for example, an SSB/CSI-RS/TRS) of the non-serving cell. In other words, the UE may determine a TCI state of the DM-RS of the PDSCH/PDCCH of the non-serving cell, based on the SSB of the non-serving cell. The UE may perform reception/measurement of a DM-RS and channel estimation of the serving cell/non-serving cell, based on the determined TCI state. The UE may perform reception/demodulation of a PDSCH/PDCCH of the serving cell/non-serving cell, based on the determined TCI state. The QCL source may be a direct or indirect QCL source.

The indirect QCL source may be QCL information not explicitly indicated (notified) by RRC / MAC CE / DCI or the like and may be an SSB related to the newest (latest) PRACH transmission, for example. The direct QCL source may be QCL information explicitly indicated (notified) by RRC / MAC CE / DCI or the like and may be included in a TCI state, for example.

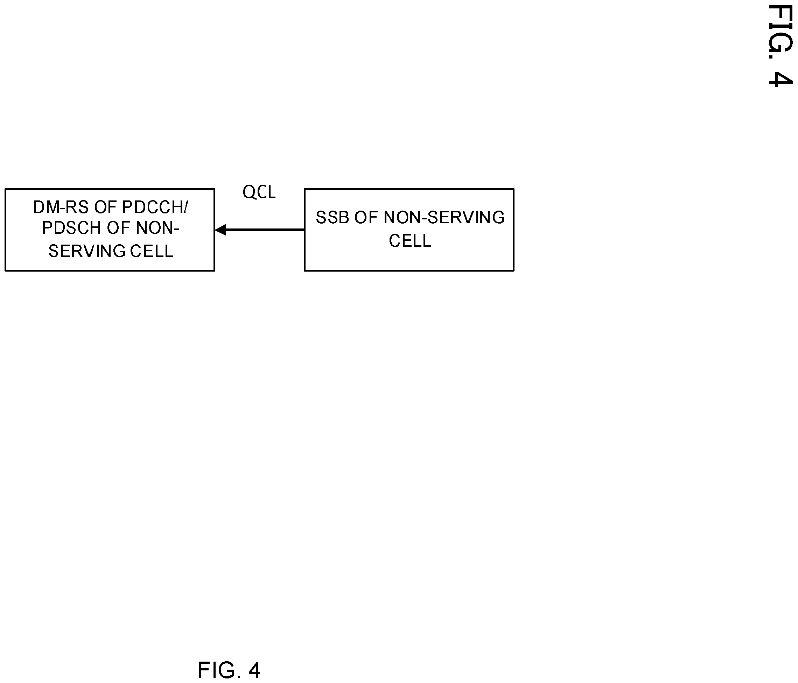

FIG. 4 is a diagram to show a first example of a QCL relationship in a second embodiment. As shown in FIG. 4, the QCL source (indirect QCL source) of the DM-RS of a PDSCH/PDCCH of the non-serving cell may be the SSB of the non-serving cell.

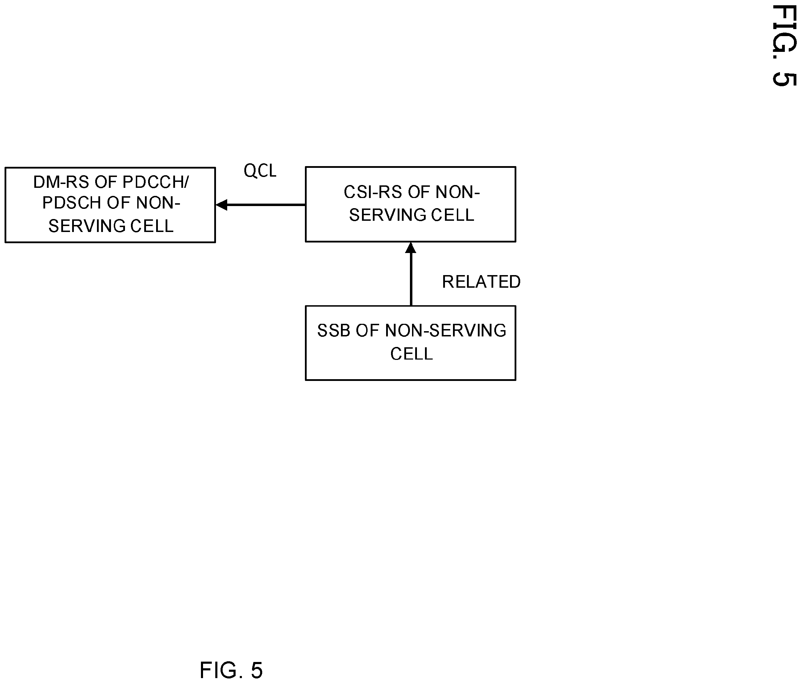

FIG. 5 is a diagram to show a second example of a QCL relationship in the second embodiment. As shown in FIG. 5, the direct or indirect QCL source of the DM-RS of the PDSCH/PDCCH of the non-serving cell may be the CSI-RS of the non-serving cell related to the SSB of the non-serving cell. The CSI-RS in FIG. 5 may be interpreted as a TRS.

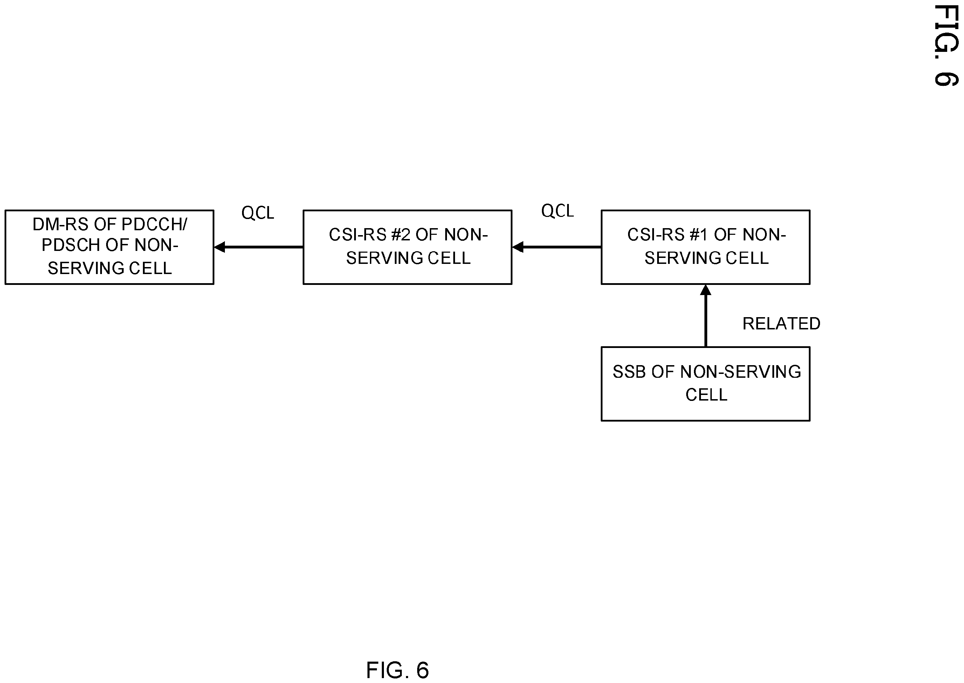

FIG. 6 is a diagram to show a third example of a QCL relationship in the second embodiment. As shown in FIG. 6, the QCL source of CSI-RS #2 of the non-serving cell may be CSI-RS #1 of the non-serving cell related to the SSB of the non-serving cell, and the QCL source of the DM-RS of the PDSCH/PDCCH of the non-serving cell may be CSI-RS #2 of the non-serving cell. At least one CSI-RS in FIG. 6 may be interpreted as a TRS.

The UE may perform assumption in which a CSI-RS resource is interpreted as an SSB (SS/PBCH block) in (4-1) to (5-3) described above, for example.

According to the second embodiment, it is possible to easily determine a TCI state of a DM-RS of a PDSCH/PDCCH of a non-serving cell. Moreover, as in the first embodiment, communication overhead can be suppressed.

A period in which data communication is not possible at the time of crossing a PCI boundary (which may mean shift from a state of receiving a PDCCH/PDSCH DMRS of a certain PCI to a state of receiving a PDCCH/PDSCH DMRS of another PCI) can be shortened. Before this proposal, handover control is performed at the time of crossing a PCI boundary, which requires a period for PRACH transmission, reception of higher layer control information from a higher layer, and the like and hence causes a period where data communication cannot be appropriately performed in the meantime. In this proposal, it is not necessary to perform handover control at the time of crossing a PCI boundary, which enables a new PCI to be used earlier.

Since QCL sources in which a PDCCH/PDSCH DMRS is permitted are CSI-RSs of different types, existing QCL assumption permitted in (1-1) to (5-3) can be directly applied. Hence, by combining information of a non-serving cell with the TCI state of a CSI-RS, this enables direct reception of a PDCCH/PDSCH DMRS from a PCI of the non-serving cell.

Since the UE performs reception from only one TRP at once, the UE selects inter-PCI dynamic point selection (DPS). For example, in existing QCL assumption of a DMRS of a PDSCH/PDCCH, the explicit QCL source of the PDCCH/PDSCH DMRS is a CSI-RS/TRS. Hence, only by defining an SSB of the non-serving cell as a source RS of the TRS/CSI-RS, the existing QCL assumption need not necessarily be changed.

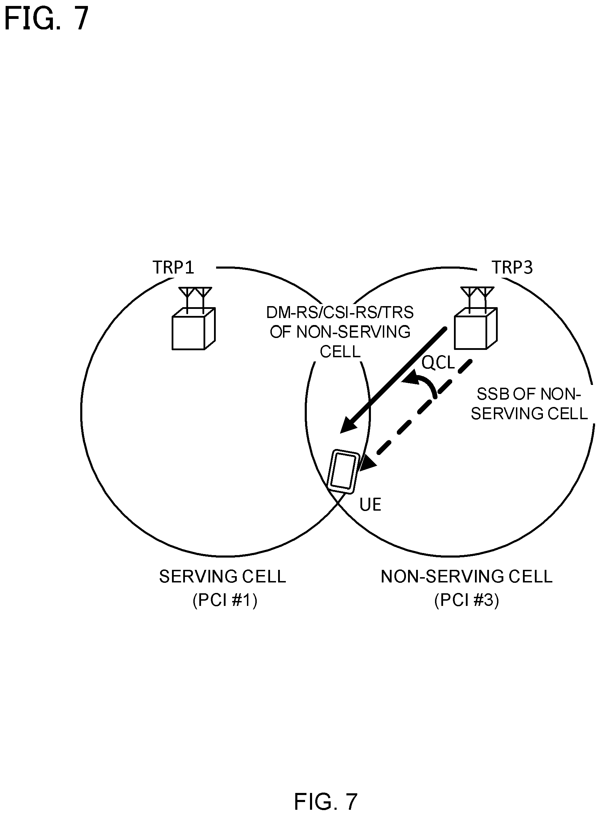

FIG. 7 is a diagram to show an example of RS transmission in the first embodiment and the second embodiment. In the example in FIG. 7, a DM-RS/CSI-RS/TRS of a PDSCH/PDCCH of a non-serving cell is transmitted from TRP #3 in the non-serving cell (PCI #3). An SSB of the non-serving cell (PCI #3) is transmitted from TRP #3. In this example, the indirect QCL source of the DM-RS of the PDSCH/PDCCH of the non-serving cell may be the SSB of the non-serving cell. In this example, the direct or indirect QCL source of the DM-RS of the PDSCH/PDCCH of the non-serving cell may be the CSI-RS/TRS of the non-serving cell, and the CSI-RS/TRS may be associated with the SSB of the non-serving cell.

In other words, the UE may assume that a higher layer parameter corresponding to the DM-RS/CSI-RS/TRS of the PDSCH/PDCCH of the non-serving cell is configured in the non-serving cell.

### <Third Embodiment>

The UE may update a TCI state of a DM-RS of a PDCCH/PDSCH and update (switch) assumption of a higher layer parameter (Serving cell config) related to the serving cell, depending on whether an RS (CSI-RS/SSB) related to (having a QCL relationship with) the QCL source (CSI-RS/TRS/SSB) of the TCI state is an RS of a serving cell or an RS of a non-serving cell. When the RS related to the QCL source of the TCI state is an RS of a non-serving cell, the UE may carry out one of first to fourth aspects to be described below. For example, the UE may apply the first embodiment to the first aspect (case where a plurality of cells have approximately the same serving cell configuration). For example, the UE may apply at least one of the second and third embodiments to at least one of the second to fourth aspects (case where a plurality of serving cell configurations (candidates) for a non-serving cell are configured). The first to fourth aspects assume a single TRP but may assume multi-TRP.

The UE may update a TCI state of a DM-RS of a PDCCH/PDSCH and update (switch) assumption of a higher layer parameter (Serving cell config) related to the serving cell depending on whether a DM-RS of a PDCCH/PDSCH configured with the TCI state is an RS of a serving cell or an RS of a non-serving cell. When the DM-RS of the PDCCH/PDSCH configured with the TCI state is an RS of a non-serving cell, the UE may carry out one of first to fourth aspects to be described below.

The UE may update a TCI state of a DM-RS of a PDCCH/PDSCH and update (switch) assumption of a higher layer parameter (Serving cell config) related to the serving cell depending on whether the QCL source (CSI-RS/TRS/SSB) of the TCI state is an RS of a serving cell or an RS of a non-serving cell. When the QCL source of the TCI state is an RS of a non-serving cell, the UE may carry out one of first to fourth aspects to be described below.

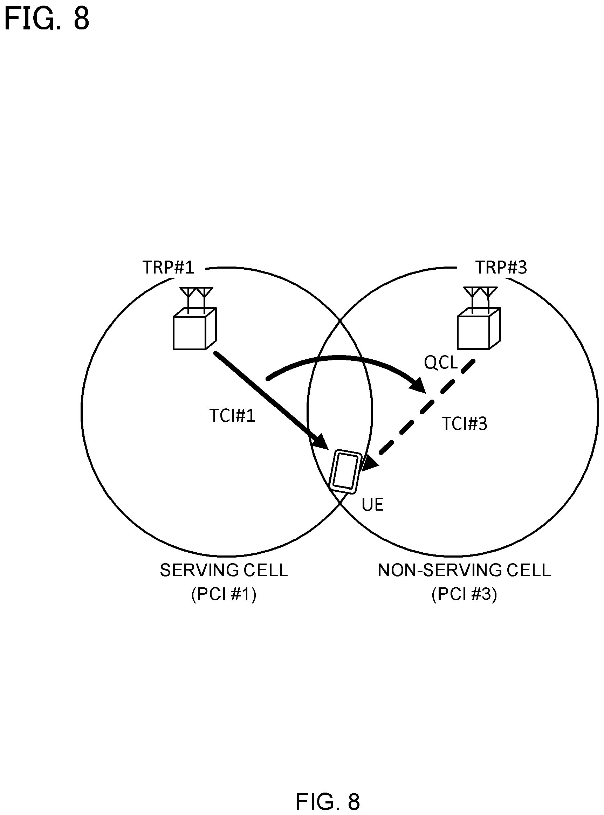

FIG. 8 is a diagram to show an example of switching of a TCI state in a third embodiment. The UE receiving an indication of update from TCI #1 to TCI #3 (UE updating a QCL state) overwrites assumed Serving cell config with reference to a higher layer parameter (RRC parameter) related to a cell associated with TCI #3 to which the TCI state is updated. In this case, inter-PCI dynamic point (TRP) selection for update of a TCI may be applied by a MAC CE / DCI. The cell corresponding to TCI #3 is a cell of an SSB to which an RS of at least one QCL type configured in the TCI state (for example, an RS of type D) is related, for example.

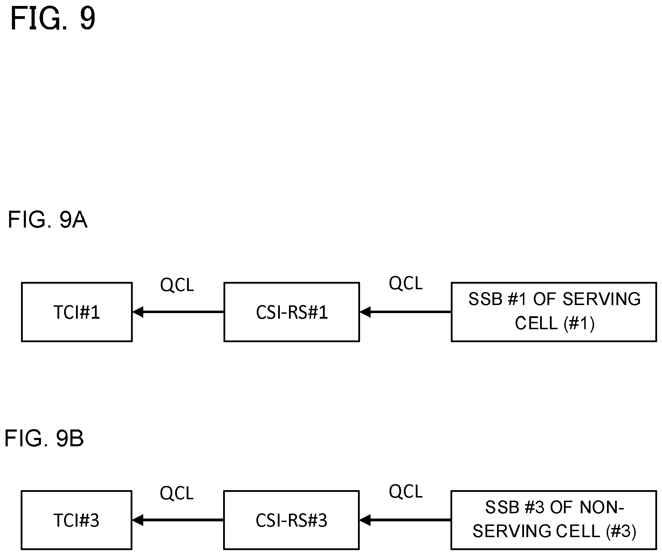

FIG. 9A is a diagram to show QCL relationships of an RS in a serving cell. The QCL source of TCI #1 is CSI-RS #1, and the QCL source of CSI-RS #1 is an SSB of serving cell #1. The cell associated with TCI #1 may be a cell (cell #1) of an SSB to which an RS of at least one QCL type configured in the TCI state (for example, an RS of type D) is related, for example.

FIG. 9B is a diagram to show QCL relationships of an RS in a non-serving cell. The QCL source of TCI #3 is CSI-RS #3, and the QCL source of CSI-RS #3 is an SSB of non-serving cell #3. The cell associated with TCI #3 may be a cell (cell #3) of an SSB to which an RS of at least one QCL type configured in the TCI state (for example, an RS of type D) is related, for example.

When the examples in FIGS. 9A and 9B are applied, the UE may update assumption of a higher layer parameter related to the serving cell depending on whether an RS related to the QCL source of the TCI state is an RS (SSB #1) of a serving cell or an RS (SSB #3) of a non-serving cell. The UE may update assumption of a higher layer parameter related to the serving cell depending on whether a DM-RS of a PDCCH/PDSCH configured with the TCI state is an RS of a serving cell (RS configured with TCI #1) or an RS of a non-serving cell (RS configured with TCI #3). The UE may update assumption of a higher layer parameter related to the serving cell depending on whether the QCL source of the TCI state is an RS (CSI-RS #1) of a serving cell or an RS (CSI-RS #3) of a non-serving cell.

### {First Aspect}

In a case of performing communication with one TRP (case of applying a single TRP), layer 1 / layer 2 (L1/L2) inter-cell mobility of the UE is configured only for a plurality of cells with approximately the same serving cell configuration. For example, when the plurality of cells have the same configuration in terms of at least one of a PDCCH/PDSCH configuration (DL BWP configuration) and a PUCCH/PUSCH configuration (UL BWP configuration), L1/L2 inter-cell mobility may be configured. When configurations other than a configuration of QCL/PCI/SSB/CSI-RS/SRS are the same, L1/L2 inter-cell mobility may be configured.

In this case, the UE can perform inter-cell mobility (handover) according to an indication by a MAC CE / DCI without receiving any configuration by RRC signaling.

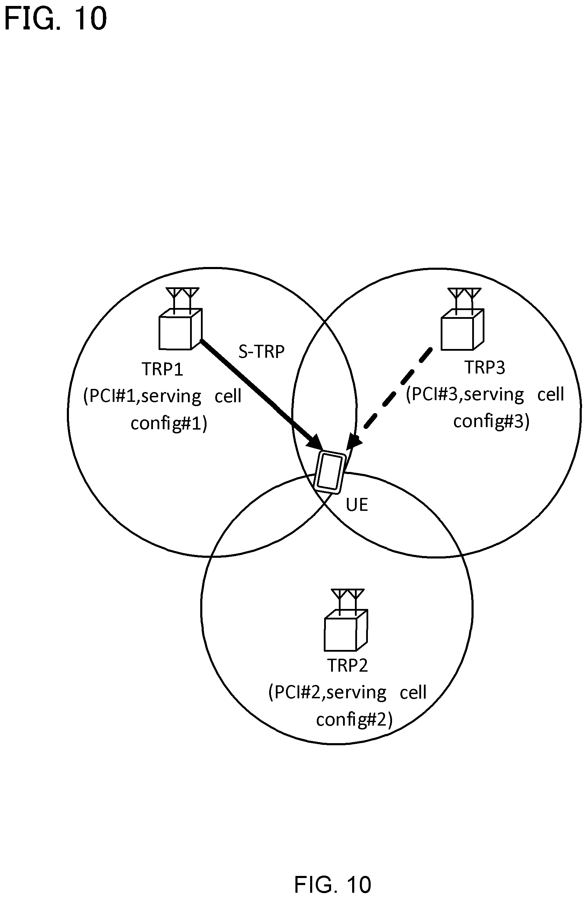

FIG. 10 is a diagram to show an application example of a single TRP. In FIG. 10, only one TRP (TRP1) of multi-TRP performs transmission to the UE. The serving cell configuration of TRP1 (serving cell config #1) and the serving cell configuration of TRP3 (serving cell config #3) are approximately the same as described above, and hence L1/L2 inter-cell mobility is configured for TRP1 and TRP3.

For example, when at least one of (1) to (3) below is satisfied, L1/L2 inter-cell mobility may be configured between cells.
(1) The cells have the same serving cell configuration.
(2) A plurality of cells have at least the same configuration of a PDCCH/PDSCH.
(3) The same configuration is used for configurations other than the configuration of QCL/PCI/SSB/CSI-RS/SRS in terms of at least one of the configurations of a PDCCH/PDSCH/PUCCH/PUSCH.

### {Second Aspect}

In a case of performing communication with one TRP (case of applying a single TRP), the UE receives in advance configurations of a plurality of candidate serving cells being non-serving cells corresponding to a frequency, by higher layer signaling (RRC reconfiguration signaling). When the UE receives an indication indicating one of the plurality of candidate serving cells by a MAC CE / DCI, the UE then changes (handovers) the serving cell to the candidate serving cell indicated by the indication. Note that a configuration of a candidate serving cell and a candidate serving cell configuration may be interchangeably interpreted.

An upper limit of the number of candidate serving cell configurations may be defined. The upper limit may be a fixed value or may be a variable value configured by higher layer signaling or the like. The UE receives an indication of serving cell change by a MAC CE / DCI to enable L1/L2 inter-cell mobility.

When the UE receives the MAC CE / DCI indicating serving cell change (update), the UE changes to the indicated serving cell having an updated serving cell configuration, after a specific period. The specific period may correspond to X ms / X symbols after the indication by the MAC CE / DCI. The specific period may correspond to Y ms / Y symbols after HARQ-ACK feedback corresponding to the MAC CE / DCI.

The MAC CE / DCI indicating serving cell change may include a serving cell index, a PCI, or a different ID related to the serving cell. The UE may determine other fields in the MAC CE / DCI as indications related to the serving to be changed to.

For example, in the example in FIG. 10, when the second aspect is applied, the UE is configured with candidate serving cell configurations (serving cell configuration of TRP2 (serving cell config #2) and serving cell configuration of TRP3 (serving cell config #3)) in addition to the serving cell configuration of TRP1 (serving cell config #1). When the UE receives the MAC CE / DCI indicating serving cell change, the UE then updates the serving cell configuration to a corresponding one of the above candidate serving cell configurations.

For example, when the UE receives a MAC CE / DCI indicating the serving cell configuration of TRP2, the UE changes the serving cell configuration to the serving cell configuration of TRP2 and changes (handovers) the serving cell to the serving cell of TRP2.

According to the second aspect, serving cell change (handover) is performed according to an indication by a MAC CE / DCI, by using a candidate serving cell configuration received in advance, rapid inter-cell mobility can be achieved.

### {Third Aspect}

Control combining the first aspect and the second aspect may be performed. The UE receives (is configured with) configurations of a plurality of candidate serving cells being non-serving cells corresponding to a frequency, by higher layer signaling (RRC reconfiguration signaling). When the UE receives information related to QCL (QCL/TCI) of a non-serving cell by a MAC CE or DCI, the UE then changes (handovers) the serving cell to the candidate serving cell corresponding (related) to the non-serving cell and applies the QCL.

For example, when a QCL/TCI related to an RS of the non-serving cell is indicated by DCI for a PDSCH, the UE may change the serving cell to the non-serving cell (candidate serving cell) after the specific period by using the configuration of the candidate serving cell corresponding (related) to the non-serving cell and apply the indicated QCL/TCI. The specific period may be the same as that illustrated in the second aspect.

For example, when a QCL/TCI related to an RS of the non-serving cell is activated by a MAC CE for a PDCCH/PDSCH, the UE may change the serving cell to the non-serving cell (candidate serving cell) by using the configuration of the candidate serving cell corresponding (related) to the non-serving cell and apply the activated QCL/TCI.

Note that all QCLs/TCIs activated by a MAC CE for a PDCCH/PDSCH are preferably related to the same serving cell. This can prevent the serving cell configuration from being changed dynamically (frequently).

### {Fourth Aspect}

When a plurality of candidate serving cell configurations corresponding to a frequency are configured, the UE may simultaneously apply/maintain/support/hold at least two (a plurality of) candidate serving cell configurations among the plurality of candidate serving cell configurations. The UE may perform communication simultaneously with the plurality of serving cells corresponding to the plurality of candidate serving cell configurations. This is a similar procedure to Dual active protocol stack based handover (DAPS HO). In other words, the UE simultaneously applies a candidate serving cell configuration before change and a candidate serving cell configuration after the change, during a specific period of the handover. When the UE receives an indication indicating one of the plurality of candidate serving cells, the UE then changes (handovers) to the candidate serving cell indicated by the indication.

An upper limit of the number of configurations (number of candidate serving cells) may be defined. The upper limit may be a fixed value or may be a variable value configured by higher layer signaling or the like.

When different QCLs/TCIs related to both an RS of a serving cell and an RS of a non-serving cell are configured/indicated/activated for a PDCCH/PDSCH by a MAC CE / DCI, the UE may perform the above processing (processing in the fourth aspect).

The UE maintains/supports/holds two serving cell configurations with both of the cells corresponding to the frequency as serving cells. The UE then simultaneously receives DL signals from the two serving cells. For actual reception of the DL signals, Time Division Multiplexing (TDM) or Space Division Multiplexing (SDM) is used based on UE capability. For different/dynamic PDCCH/PDSCH receptions related to different cells, the UE use different serving cell configurations.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

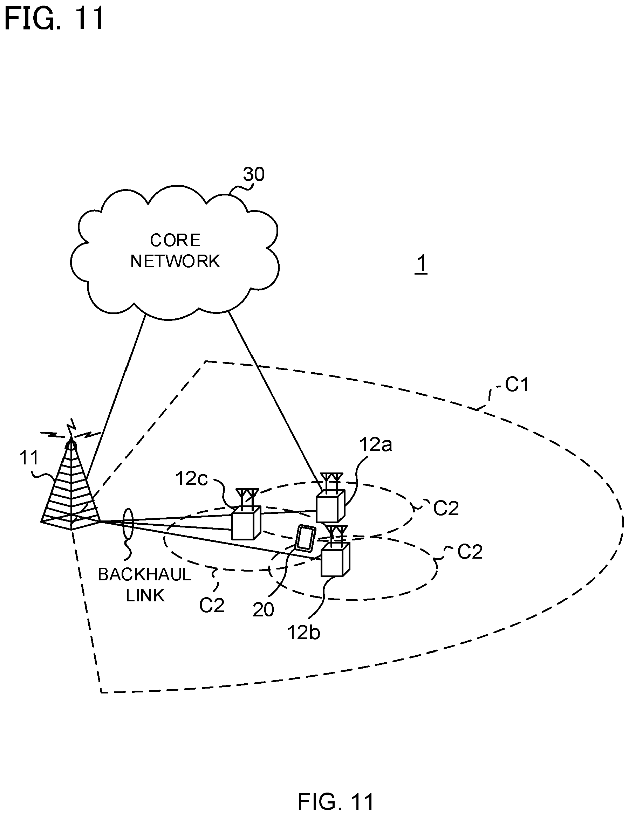

FIG. 11 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

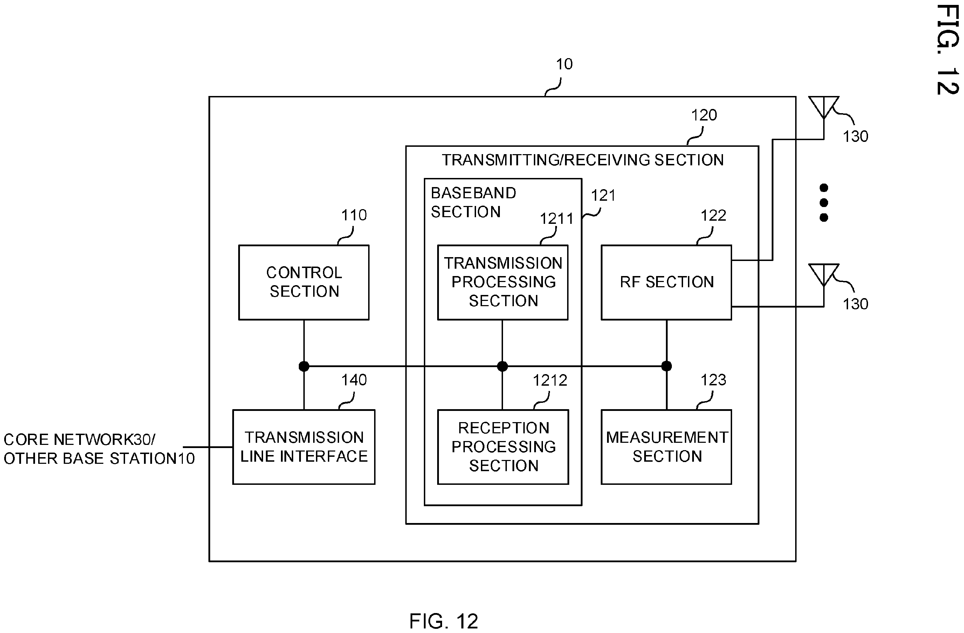

FIG. 12 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit a synchronization signal block of a non-serving cell.

The control section 110 may control a transmission configuration indication (TCI) state of a demodulation reference signal of a physical downlink shared channel or a physical downlink control channel of the non-serving cell, corresponding to the synchronization signal block of the non-serving cell.

### (User Terminal)

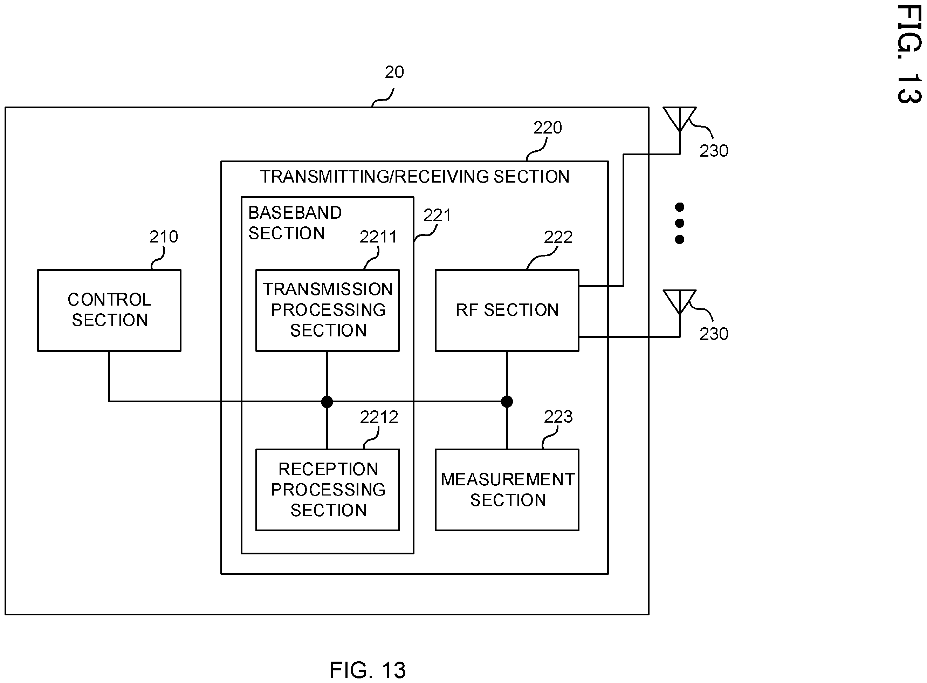

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a synchronization signal block of a non-serving cell.

The control section 210 may determine a transmission configuration indication (TCI) state of a demodulation reference signal of a physical downlink shared channel or a physical downlink control channel of the non-serving cell, based on the synchronization signal block of the non-serving cell. The control section 210 may assume that a quasi-co-location source of the demodulation reference signal is a channel state information reference signal or a tracking reference signal of the non-serving cell and that a quasi-co-location source of the channel state information reference signal or the tracking reference signal is the synchronization signal block of the non-serving cell. The control section 210 may assume that a quasi-co-location source of the demodulation reference signal is the synchronization signal block of the non-serving cell. The control section 210 may update assumption of a higher layer parameter related to a serving cell, depending on whether a reference signal related to a quasi-co-location source of the transmission configuration indication state of the demodulation reference signal is a reference signal of a serving cell or a reference signal of the non-serving cell.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

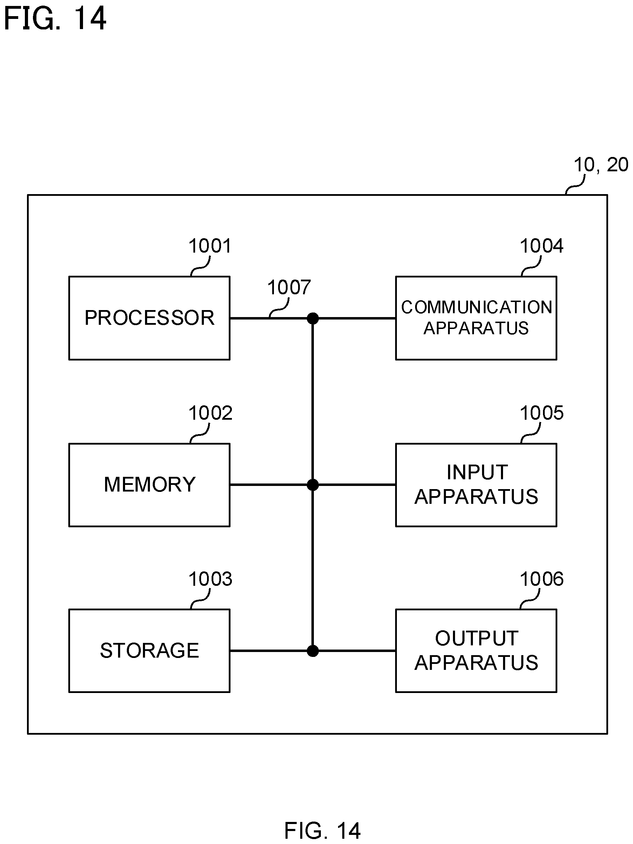

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a synchronization signal block of a non-serving cell; and
a control section that determines a transmission configuration indication (TCI) state of a demodulation reference signal of a physical downlink shared channel or a physical downlink control channel of the non-serving cell, based on the synchronization signal block of the non-serving cell.

2. The terminal according to claim 1, wherein
the control section assumes that a quasi-co-location source of the demodulation reference signal is a channel state information reference signal or a tracking reference signal of the non-serving cell and that a quasi-co-location source of the channel state information reference signal or the tracking reference signal is the synchronization signal block of the non-serving cell.

3. The terminal according to claim 1, wherein
the control section assumes that a quasi-co-location source of the demodulation reference signal is the synchronization signal block of the non-serving cell.

4. The terminal according to any one of claims 1 to 3, wherein
the control section updates assumption of a higher layer parameter related to a serving cell, depending on whether a reference signal related to a quasi-co-location source of the transmission configuration indication state of the demodulation reference signal is a reference signal of a serving cell or a reference signal of the non-serving cell.

5. A radio communication method for a terminal, the radio communication method comprising:
receiving a synchronization signal block of a non-serving cell; and
determining a transmission configuration indication (TCI) state of a demodulation reference signal of a physical downlink shared channel or a physical downlink control channel of the non-serving cell, based on the synchronization signal block of the non-serving cell.

6. A base station comprising:
a transmitting section that transmits a synchronization signal block of a non-serving cell; and
a control section that controls a transmission configuration indication (TCI) state of a demodulation reference signal of a physical downlink shared channel or a physical downlink control channel of the non-serving cell, corresponding to the synchronization signal block of the non-serving cell.
